# EUROPEAN PATENT SPECIFICATION

(11) **EP 3 802 423 B1**
(45) Date of publication and mention of the grant of the patent: **02.04.2025**
(21) Application number: 19811778.0
(22) Date of filing: 26.04.2019
(51) Int. Cl.: C01B 39/48, C01B 39/08, B01J 29/89, B01J 35/30

(54) **METHODS OF PREPARING CRYSTALLINE GERMANOSILICATE MATERIALS OF CIT-13 TOPOLOGY**
VERFAHREN ZUR HERSTELLUNG VON KRISTALLINEN GERMANIUMSILIKATMATERIALIEN DER CIT-13-TOPOLOGIE
MÉTHODES DE PRÉPARATION DE MATÉRIAUX À BASE DE GERMANOSILICATE CRISTALLIN DE TOPOLOGIE CIT-13

(30) Priority: 31.05.2018 US 201862678517 P
(43) Date of publication of application: 14.04.2021
(73) Proprietor: California Institute of Technology, Pasadena, CA 91125 (US)
(72) Inventor: DAVIS, Mark, E., Pasadena, CA 91105 (US); KANG, Jong, Hun, Seoul 08826 (KR)
(74) Representative: Murgitroyd & Company
(86) International application number: PCT/US2019/029323
(87) International publication number: WO 2019/231595

(56) References cited:
- EP-A1- 2 223 894
- WO-A1-2016/196533
- WO-A1-2018/093469
- US-A1- 2016 346 771
- US-B2- 9 821 297
- KANG, J. H. ET AL.: "Synthesis and characterization of CIT-13, a german osilicate molecular sieve with extra-large pore openings", CHEMISTRY OF MATERIALS, vol. 28, no. 17, 2016, pages 6250 - 6259, XP055435166
- SHVETS, O. V. ET AL.: "The role of crystallization parameters for the synthesis of german osilicate with UTL topology", CHEMISTRY-A EUROPEAN JOURNAL, vol. 14, no. 32, 2008, pages 10134 - 10140, XP055335264

## Description

### TECHNICAL FIELD

The present disclosure is directed to methods of producing extra-large-pore crystalline germanosilicate compositions, designated CIT-13, possessing 10- and 14- membered rings, particularly methods of preparing these crystalline compositions from aqueous compositions essentially free of fluoride ions.

### BACKGROUND

Zeolites play an important role as heterogeneous catalysts and are used in a variety of industrial settings. Initially, these materials were largely developed to support the petroleum industry in the quest to create more selective, robust catalysts for making gasoline and other fuels. Currently, these solids have emerged as specialty materials, with properties that are based upon structure and chemical composition able to handle specific large-scale applications.

CIT-13 is one such molecular sieve having high promise in such catalysts. The composition and characteristic X-ray diffraction pattern of molecular sieve CIT-13 are disclosed in U.S. Pat. Appl. Pub. No. 2016/0346771, as are synthetic methods using a series of benzyl-imidazolium cations as organic structure directing agents. The synthesis mixtures exemplified therein employed mineralizing agents comprising fluoride ions and/or alkali metal or alkaline earth metal salts, which in commercial scale operations may require extra safety and cost considerations. There is, therefore, interest in alternative methods of synthesizing CIT-13, particularly in the absence of fluoride ions.

### SUMMARY

The disclosure describes improved methods for preparing germanosilicate CIT-13 compositions. The inventive methods are as defined in the claims, the methods comprising hydrothermally treating an aqueous composition comprising:
(a) a source of silicon oxide
(b) a source of germanium oxide;
(c) a hydroxide salt of at least one substituted benzyl-imidazolium organic structure-directing agent (OSDA) having a structure: 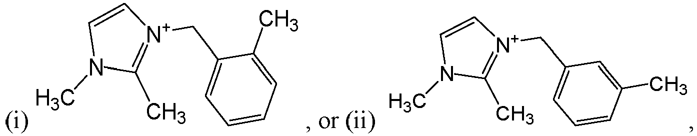 and
(d) water,

under conditions effective to crystallize a crystalline microporous germanosilicate composition of the CIT-13 topology wherein
when the OSDA is (i), the molar ratio of Si:Ge atoms is in a range from 1:1 to 3:1, and
when the OSDA is (ii), the molar ratio of water : (Si+Ge) is in a range from 2 to 9,
and wherein fluoride ions are either absent from the aqueous composition or are present at less than 1000 ppm by weight.. Additionally, or alternatively, the aqueous composition is essentially free of alkali metal or alkaline earth metal cations.

Once isolated, the crystalline microporous germanosilicate solid products may be further treated, for example by
(a) heating at a temperature in a range of from about 250°C to about 450°C; or
(b) contacting with ozone or other oxidizing agent at a temperature in a range of 25°C to 200°C;
for a time sufficient to form a dehydrated or an OSDA-depleted product.

In other embodiments, the isolated crystalline microporous germanosilicate compositions may be further treated by:
(a) treating the dehydrated or OSDA-depleted product with an aqueous alkali, alkaline earth, transition metal, rare earth metal, ammonium or alkylammonium salt; and/ or
(b) treating the dehydrated or OSDA-depleted product with at least one type of transition metal or transition metal oxide.

In other embodiments, the isolated germanosilicate solid products are calcined in air or under inert atmosphere conditions at a temperature in a range of from about 600°C to about 1200°C, preferably about 800°C to about 1000°C, for about 4-8 hours. Longer or shorter times may also be employed.

### BRIEF DESCRIPTION OF THE DRAWINGS

The present application is further understood when read in conjunction with the appended drawings. For the purpose of illustrating the subject matter, there are shown in the drawings exemplary embodiments of the subject matter; however, the presently disclosed subject matter is not limited to the specific methods, devices, and systems disclosed. In addition, the drawings are not necessarily drawn to scale. In the drawings:

**FIGs. 1****(A-C)** shows several sets of powder XRD patterns for CIT-13: **FIG. 1(A)** shows CIT-13 as made (upper) and calcined (lower); **FIG. 1(B)** shows reproducibility of patterns of products made from gels with Si/Ge = 4; **FIG. 1(C)** compares experimentally and theoretically derived sample.

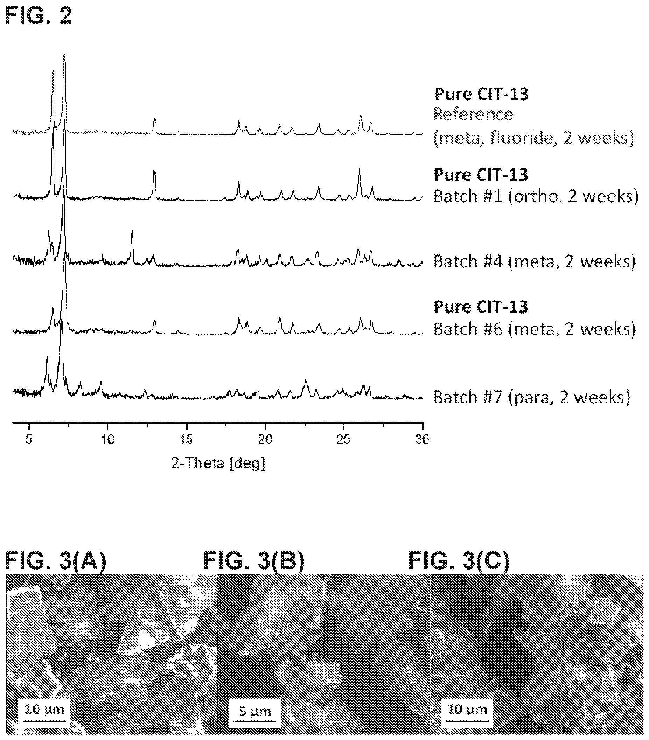

**FIG. 2** shows the PXRD patterns of several selected examples prepared as in Example 9.

**FIG. 3A, FIG. 3B and FIG. 3C** showthe SEM images of the obtained CIT-13 crystals: (A) Batch #1, (B) Batch #6, (C) a reference CIT-13 from fluoride media. The batch references may be identified in **Table 2**.

### DETAILED DESCRIPTION OF ILLUSTRATIVE EMBODIMENTS

The present invention is directed to methods of making molecular sieve CIT-13 from aqueous compositions essentially free of fluoride ions.

The present invention may be understood more readily by reference to the following description taken in connection with the accompanying Figures and Examples, all of which form a part of this disclosure. It is to be understood that this invention is not limited to the specific products, methods, conditions or parameters described or shown herein, and that the terminology used herein is for the purpose of describing particular embodiments by way of example only and is not intended to be limiting of any claimed invention. Similarly, unless specifically otherwise stated, any description as to a possible mechanism or mode of action or reason for improvement is meant to be illustrative only, and the invention herein is not to be constrained by the correctness or incorrectness of any such suggested mechanism or mode of action or reason for improvement. Throughout this text, it is recognized that the descriptions refer to compositions and methods of making and using said compositions. That is, where the disclosure describes or claims a feature or embodiment associated with a composition or a method of making or using a composition, it is appreciated that such a description or claim is intended to extend these features or embodiment to embodiments in each of these contexts (i.e., compositions, methods of making, and methods of using).

### Compositions

The present invention is directed to methods of producing compositions described collectively as CIT-13. The compositions are described in terms of crystalline microporous germanosilicate compositions comprising a three-dimensional framework having pores defined by 10- and 14-membered rings. As should be apparent from the descriptions herein, these 10- and 14-membered rings comprise silicon-oxygen and germanium-oxygen linkages. The 10- and 14 membered rings are defined by convention as referring to the number of alternating oxygen atoms in the respective rings and not the total number of atoms. Additionally, this number of oxygen atoms in the ring also equals the number of tetrahedral atoms in the ring. The compositions exhibit a powder X-ray diffraction (XRD) pattern exhibiting at least five peaks at 6.45 ± 0.2, 7.18 ± 0.2, 12.85 ± 0.2, 20.78 ± 0.2, 26.01 ± 0.2, and 26.68 ± 0.2 degrees 2-θ.

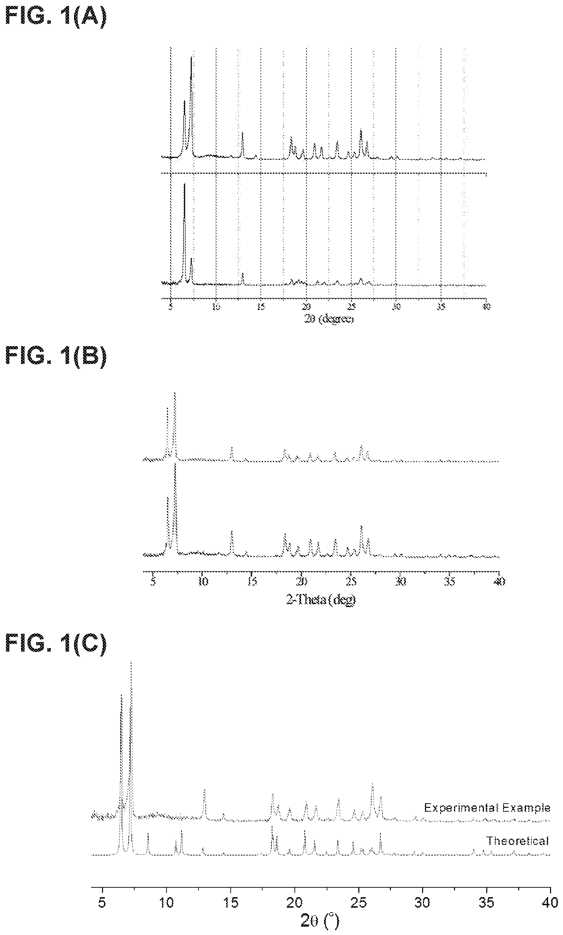

In other embodiments, the crystalline microporous germanosilicate compositions may be described in terms of those compositions that exhibit at least one of characteristics:
(a) a powder X-ray powder diffraction (XRD) pattern substantially the same as shown in **FIG. 1(A), 1(B)** or **1(C)****;** or
(b) unit cell parameters substantially equal to the following:

| **Space group** | *Cmmm* |
|---|---|
| ***a* (Å)** | 27.4374(5) |
| ***b* (Å)** | 13.8000(2) |
| ***c* (Å)** | 10.2910(2) |
| ***V* (Å₃)** | 3896.6(1) |
| ***Z*** | 8 |
| ***ρ* (g/cm³)** | 2.144(2) |
| ***λ*** (**Å**) | 0. 776381(1) |

The crystalline compositions may exhibit one or all of the characteristics described in (a) or (b).

It should be appreciated that these crystalline germanosilicates may also be characterized/defined in terms of any combination of structural and physical data. Similarly, while it is believed that the structures described herein are true and accurate, the novelty of these new materials is not necessarily defined by the exactness of the descriptions of these structures, should any future information be identified that later causes a re-characterization of the structure. Similarly, as the physical data are may be affected by experimental artifacts, the exactness of any specific data point may be subject to such experimental variability.

Also described herein are crystalline microporous germanosilicate compositions that may be defined in terms of their powder X-ray diffraction (XRD) pattern, as exhibiting at least five of the characteristic peaks at 6.45 ± 0.2, 7.18 ± 0.2, 12.85 ± 0.2, 18.26 ± 0.2, 18.36 ± 0.2, 18.63 ± 0.2, 20.78 ± 0.2, 21.55 ± 0.2, 23.36 ± 0.2, 24.55 ± 0.2, 26.01 ± 0.2, and 26.68 ± 0.2 degrees 2-*θ*. The composition may exhibit six, seven, eight, nine, or ten of these characteristic peaks. Likewise, the composition may exhibit 5, 6, 7, 8, 9, 10, or more of the peaks identified above.

**In** other embodiments, the crystalline compositions exhibit a powder X-ray powder diffraction (XRD) pattern substantially the same as shown in **FIG. 1(A), 1(B)** or **1(C)****.** Note here that the relative intensities of the peaks shown in these or any other figures may be subject to experimental variations, for example due to scanning speed, sample separation, particle size, degree if crystallinity (e.g., related to degree of heat processing). For example, pre-calcined materials isolated from the mixtures used to prepare them, may exhibit broader peaks than those same materials post-heat treatment or post-calcination. Such variability is reflected, in part, by any differences in the various XRD patterns described in the instant application. The person of skill in the art in this area would appreciate the significance of any such variations.

In still other embodiments, the crystalline compositions exhibit unit cell parameters substantially equal or equivalent to the following:

| **Space group** | *Cmmm* |
|---|---|
| ***a* (Å)** | 27.4374(5) |
| ***b* (Å)** | 13.8000(2) |
| ***c* (Å)** | 10.2910(2) |
| ***V* (Å³)** | 3896.6(1) |
| ***Z*** | 8 |
| ***ρ* (g/cm³)** | 2.144(2) |
| ***λ* (Å)** | 0. 776381(1) |

Crystallographic evidence also has shown that the channel dimensions of the 10- and 14-membered rings are 6.2 x 4.5 Å and 9.1 x 7.2 Å, respectively. Additionally, in some embodiments, the crystalline framework may have a density of 16.4 tetrahedral atoms ("T-atoms") per nm³.

In certain embodiments, the crystalline compositions of the present disclosure can have a molar ratio of Si:Ge atoms within any one or more of the ranges of from 1:1 to 2:1 (or lower), from 2:1 to 3:1, from 3:1 to 4:1, from 4:1 to 5:1, from 5:1 to 6:1, from 6:1 to 7:1, from 7:1 to 8:1, from 8:1 to 9:1, from 9:1 to 10:1, from 10:1 to 11:1, from 11:1 to 12:1, from 12:1 to 13:1, from 13:1 to 14:1, from 14:1 to 15:1, from 15:1 to 16:1 or higher..

Depending on the processing of the crystalline compositions, these compositions may contain the organic structuring agent (OSDA) used in their preparation or may be substantially free or devoid of any such OSDA (the terms "substantially" and "substantially devoid" are analogous to the term "OSDA depleted" described elsewhere herein). The specific structuring agents used to prepare these crystalline compositions are also described elsewhere herein.

The presence of these OSDAs may be identified using, for example, ¹³C NMR or any of the methods defined in the Examples. It is a particular feature of the present invention that the cationic OSDAs retain their original structures, including their stereochemical conformations during the synthetic processes, these structures being compromised during the subsequent calcinations or oxidative treatments.

The disclosed crystalline microporous germanosilicate compositions include those which result from the post-treatment or further processing described in the following Methods section of this disclosure. These include germanosilicates in their hydrogen forms or those having cations, metals or metal oxides within their pore structures. Accordingly, in certain embodiments, the microporous pure or substituted germanosilicates contain Li, Na, K, Rb, Cs, Be, Mg, Ca, Sr, Be, Al, Ga, In, Zn, Ag, Cd, Ru, Rh, Pd, Pt, Au, Hg, La, Ce, Pr, Nd, Pm, Sm, Eu, or R₄₋ₙN⁺Hₙ cations, where R is alkyl, n = 0-4 in at least some of their pores. In specific aspects of these embodiments, these pores contain NaCl or KCl.

Additional embodiments include those crystalline microporous solids of the present disclosure, at least some of whose pores transition metals, transition metal oxides, or salts, said metals including, for example scandium, yttrium, titanium, zirconium, vanadium, manganese, chromium, molybdenum, tungsten, iron, ruthenium, osmium, cobalt, rhodium, iridium, nickel, palladium, platinum, copper, silver, gold, or mixtures thereof, each as a metal, oxide, or salt. In one specific embodiment, the pores of the germanosilicate solids contain copper, as metal, oxide, or salt.

### Methods of Preparing the Inventive Compositions

The methods disclosed herein for preparing germanosilicate CIT-13 compositions generally comprise hydrothermally treating an aqueous composition comprising:
(a) a source of a silicon oxide
(b) a source of a germanium oxide;
(c) a hydroxide salt of at least one substituted benzyl-imidazolium organic structure-directing agent (OSDA) having a structure: 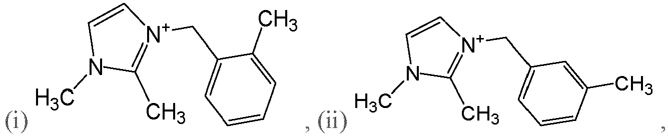 and
(d) water.
This hydrothermal treatment is conducted under conditions effective to crystallize the crystalline microporous germanosilicate CIT-13 composition, wherein when the OSDA is (i), the molar ratio of Si:Ge atoms is in a range from 1:1 to 3:1, and when the OSDA is (ii), the molar ratio of water : (Si+Ge) is in a range from 2 to 9, and wherein fluoride ions are either absent from the aqueous composition or are present at less than 1000 ppm by weight. Additionally, or alternatively, the aqueous composition is essentially free of alkali metal or alkaline earth metal cations.

The source of silicon oxide, as described above, may comprise a silicate, silica hydrogel, silicic acid, fumed silica, colloidal silica, tetra-alkyl orthosilicate, a silica hydroxide or combination thereof. Sodium silicate or tetraorthosilicates, for example tetraethyl orthosilicate (TEOS), are preferred sources. The sources of silicon oxide may be amorphous (i.e., the XRD pattern of the solid showing little or no structure), microcrystalline (i.e., the XRD pattern of the solid showing broadened reflectance peaks indicative of a small degree of long range order), or crystalline (i.e., the XRD pattern of the solid showing well defined and sharp reflectance peaks).

Sources of germanium oxide can include alkali metal orthogermanates, M₄GeO₄, containing discrete GeO₄⁴⁻ ions, GeO(OH)₃⁻, GeO₂(OH)₂²⁻, [(Ge(OH)₄)₈(OH)₃]³⁻, or neutral solutions of germanium dioxide containing Ge(OH)₄, or alkoxide or carboxylate derivatives thereof (e.g., GeO₂, or a hydrated derivative thereof).

Where the aqueous composition is free from any of the optional sources of metal oxides, the process yields pure crystalline microporous pure-germanosilicate materials, the term "pure" reflecting the absence of all but the inevitable impurities present in the sources of silicon or germanium oxides. The aqueous compositions may also comprise other sources of metal oxide, deliberately added, for example sources of aluminum oxide, boron oxide, gallium oxide, hafnium oxide, iron oxide, tin oxide, titanium oxide, vanadium oxide, zinc oxide, zirconium oxide, or combination or mixture thereof, in which case the resulting product may contain the corresponding metal oxide within the resulting lattice framework.

In preparing the germanosilicates, when the OSDA is (i), the molar ratio of Si:Ge atoms is in a range from 1:1 to 3:1. When the OSDA is (ii), the silicon oxide and the source of germanium oxide may be present in a molar ratio of Si:Ge in a range of from about 2:1 to about 8:1. Higher and lower ratios may also be used, though these tend to result in final product of lesser purities.

In some embodiments, the mineralizing agent comprises an aqueous alkali metal or alkaline earth metal hydroxide, thereby rendering these compositions alkaline. In certain of these embodiments, the alkali metal or alkaline earth metal hydroxide include LiOH, NaOH, KOH, RbOH, CsOH, Mg(OH)₂, Ca(OH)₂, Sr(OH)₂, or Ba(OH)₂. LiOH, NaOH, or KOH appear to be preferred. In some cases, the pH of the water is in a range of from 7 to 14, or greater. Under these conditions, the oxide precursors can be expected to be at least partially hydrated to their hydroxide forms.

Alternatively or additionally, the hydroxide mineralizing agent may be delivered as the anion associated with the OSDA cation, as described elsewhere herein.

OSDAs may generally be described in the context of 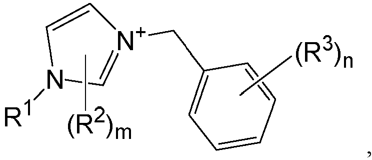 but not 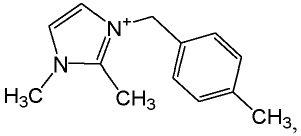 with the various options described for R² and R³ described above and elsewhere herein. As shown in the Examples, the cleanest CIT-13 materials appear to be prepared from OSDAs in which the R³ substituents are positioned ortho or meta to the benzylic linkage, for example:

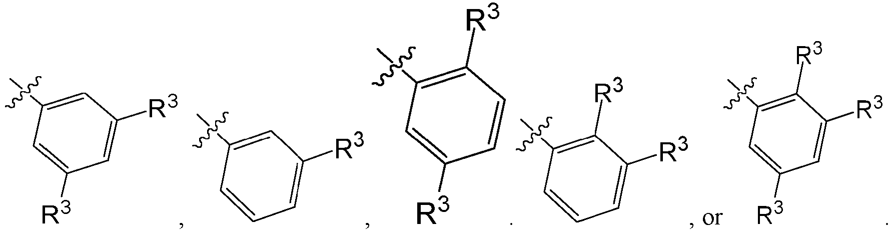

Additionally or alternatively, the substituted imidazolium portion of the OSDA may comprise:

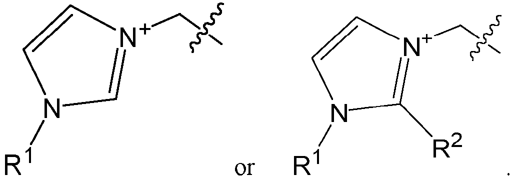

Additionally or alternatively, the substituted benzyl-imidazolium organic structure-directing agent may have a structure: 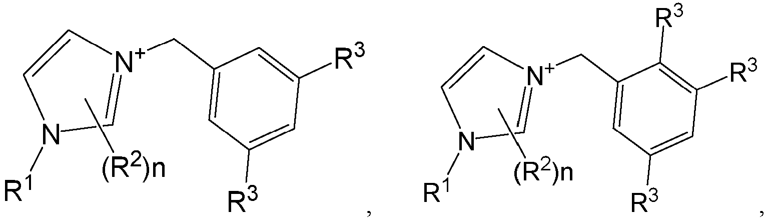 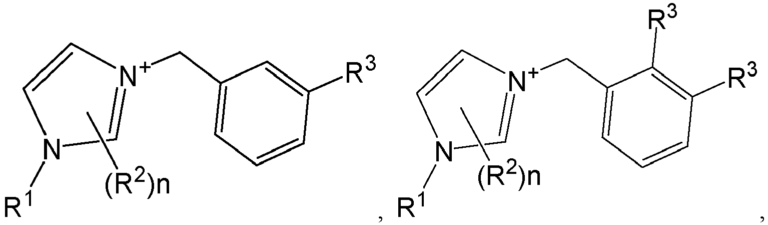 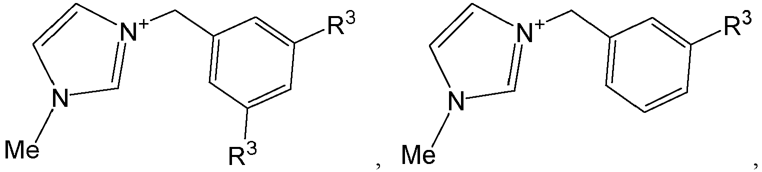 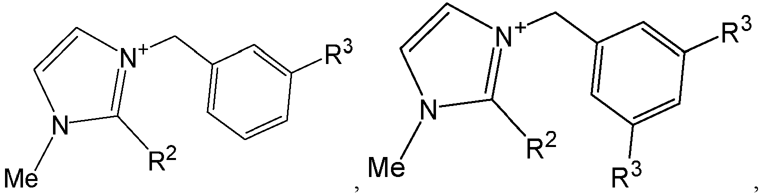 where n, R¹, R², and R³ are any of the embodiments described elsewhere herein.

Also described are substituted benzyl-imidazolium organic structure-directing agents having a structure: 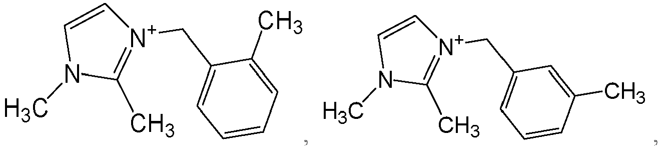 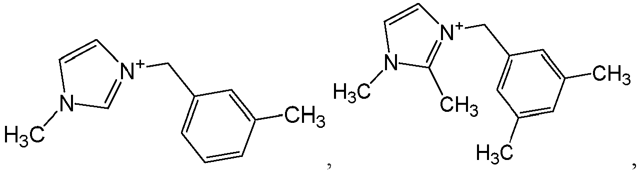 or 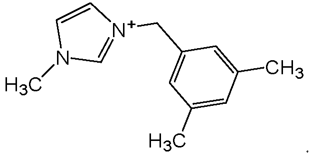 In the invention, the OSDA has a structure as defined in claim 1.

The counterion to the OSDA's described herein, at least as added to the reaction mixture, are typically bromide, chloride, fluoride, iodide, or hydroxide ion, but the OSDA may be added also to the composition as an acetate, nitrate, or sulfate. In some embodiments, the quaternary cation has an associated fluoride or hydroxide ion, preferably essentially free of other halide counterions. In separate embodiments, the associated anion is hydroxide, in which case, it may not be necessary to include additional alkali metal or alkaline earth metal hydroxides as mineralizing agents.

The processes and compositions may further be defined in terms of the ratios of other of the individual ingredients. In certain embodiments, the molar ratio of the OSDA : Si is in a range of from 0.1 to 0.15, from 0.15 to 0.2, from 0.2 to 0.25, from 0.25 to 0.3, from 0.3 to 0.35, from 0.35 to 0.4, from 0.4 to 0.45, from 0.45 to 0.5, from 0.5 to 0.55, from 0.55 to 0.6, from 0.6 to 0.65, from 0.65 to 0.7, from 0.7 to 0.75, from 0.75 to 0.8, from 0.8 to 0.85, from 0.85 to 0.9, from 0.9 to 0.95, from 0.95 to 1, or a range combining any two or more of these ranges, for example from 0.4 to 0.6 or from 0.4 to 0.75.

Additionally or alternatively, the amount of OSDA can be characterized in terms of its ratio to the combined amounts of Si and Ge (i.e., "(Si + Ge)"). In certain of these embodiments, the molar ratio of the OSDA : (Si + Ge) is in a range of from 0.1 to 0.15, from 0.15 to 0.2, from 0.2 to 0.25, from 0.25 to 0.3, from 0.3 to 0.35, from 0.35 to 0.4, from 0.4 to 0.45, from 0.45 to 0.5, from 0.5 to 0.55, from 0.55 to 0.6, from 0.6 to 0.65, from 0.65 to 0.7, from 0.7 to 0.75, from 0.75 to 0.8, from 0.8 to 0.85, from 0.85 to 0.9, from 0.9 to 0.95, from 0.95 to 1, or a range combining any two or more of these ranges, for example from 0.4 to 0.6 or from 0.4 to 0.75. In those embodiments where the mineralizing agent is the hydroxide associated with the OSDA, the amount of present in compositions are preferably in a molar ratio of OSDA : (SiO₂+GeO₂) can be within any of these preceding ranges, but is preferably in a range of from about 0.3:1 to 0.4:1, from 0.4:1 to 0.5:1, from 0.5:1 to 0.6:1, from 0.6:1 to 0.7:1, or any two or more of the foregoing ranges, for example from 0.3:1 to 0.7:1 or from 0.4:1 to 0.6:1.

In other embodiments, the molar ratio of water : Si is in a range of from about 2 to 3 (i.e., 2:1 to 3:1), from 3 to 4, from 4 to 5, from 5 to 6, from 6 to 7, from 7 to 8, from 8 to 9, from 9 to 10, from 10 to 11, from 11 to 12, from 12 to 13, from 13 to 14, from 14 to 15, from 15 to 16, from 16 to 17, from 17 to 18, from 18 to 19, from 19 to 20, or a range combining any two or more of these ranges, for example in a range of from about 2 to about 10, from about 3 to 10, or from 3 to 8, or from 8:1 to 12:1.

Additionally or alternatively, the amount of water is characterized in terms of its ratio to the combined amounts of Si and Ge (i.e., "(Si + Ge)"). When the OSDA is (i), the molar ratio of water : (Si + Ge) is in a range of from about 2 to 3 (i.e., 2:1 to 3:1), from 3 to 4, from 4 to 5, from 5 to 6, from 6 to 7, from 7 to 8, from 8 to 9, from 9 to 10, from 10 to 11, from 11 to 12, from 12 to 13, from 13 to 14, from 14 to 15, from 15 to 16, from 16 to 17, from 17 to 18, from 18 to 19, from 19 to 20, or a range combining any two or more of these ranges, for example in a range of from about 2 to about 10, from about 3 to 10, or from 3 to 8, or from 8:1 to 12:1. When the OSDA is (ii), the molar ratio of water : (Si+Ge) is in a range from 2 to 9, or in one of the sub-ranges defined above that are within this range. In those embodiments where the mineralizing agent is the hydroxide associated with the OSDA, the amount of present in compositions can be within any of these preceding ranges, but is preferably in a molar ratio of water : (SiO₂+GeO₂) in a range of from 5:1 to 6:1, from 6:1 to 7:1, from 7:1 to 8:1, from 8:1 to 9:1, from 9:1 to less than 10:1, or any combination of two or more of the foregoing ranges, for example from 5:1 to less than 10:1 or from 6:1 to 8:1.

In other embodiments, the molar ratio of hydroxide : Si is in a range of from about 0.1 to 0.15, from 0.15 to 0.2, from 0.2 to 0.25, from 0.25 to 0.3, from 0.3 to 0.35, from 0.35 to 0.4, from 0.4 to 0.45, from 0.45 to 0.5, from 0.5 to 0.55, from 0.55 to 0.6, from 0.6 to 0.65, from 0.65 to 0.7, from 0.7 to 0.75, or a range combining any two or more of these ranges, for example in a range of from about 0.4 to about 0.6, or a range combining any two or more of these ranges, for example in a range of from about 0.4 to about 0.6.

Additionally or alternatively, the amount of hydroxide can be characterized in terms of its ratio to the combined amounts of Si and Ge (i.e., "(Si + Ge)"). In certain of these embodiments, the molar ratio of hydroxide : (Si + Ge) is in a range of from about 0.1 to 0.15, from 0.15 to 0.2, from 0.2 to 0.25, from 0.25 to 0.3, from 0.3 to 0.35, from 0.35 to 0.4, from 0.4 to 0.45, from 0.45 to 0.5, from 0.5 to 0.55, from 0.55 to 0.6, from 0.6 to 0.65, from 0.65 to 0.7, from 0.7 to 0.75, or a range combining any two or more of these ranges, for example in a range of from about 0.4 to about 0.6, or a range combining any two or more of these ranges, for example in a range of from about 0.4 to about 0.6. In those embodiments where the mineralizing agent is the hydroxide associated with the OSDA, the amount of hydroxide present in compositions can be within any of these preceding ratio ranges, but is preferably in a molar ratio of OH : (SiO₂+GeO₂) in a range of from 0.3 to 0.35, from 0.35 to 0.4, from 0.4 to 0.45, from 0.45 to 0.5, from 0.5 to 0.55, from 0.55 to 0.6, from 0.6 to 0.65, from 0.65 to 0.7, or any combination of two or more the foregoing ranges, for example from 0.3:1 to 0.7:1 or from 0.4:1 to 0.6:1.

To this point, the processes have been defined in terms of conditions under conditions effective to crystallize a crystalline microporous germanosilicates of CIT-13 topology. In light of the other teachings within this disclosure, this is believed to be a sufficient description. But in certain aspects of this, these conditions include treatment of the respective hydrothermally treated aqueous composition at a temperature defined by at least one range of from 100°C to 110 °C, from 110 °C to 120°C, from 120°C to 125 °C, from 125 °C to 130 °C, from 130°C to 135 °C, from 135°C to 140°C, from 140°C to 145 °C, from 145 °C to 150°C, from 150 °C to 155°C, from 155°C to 160 °C, from 160°C to 165 °C, from 165 °C to 170°C, from 170°C to 175 °C, from 175°C to 180°C, from 180°C to 185 °C, from 185 °C to 190°C, from 190 °C to 195 °C, from 195°C to 200°C, for example, from 120°C to 160°C or from 140°C to 180°C. In related embodiments, the times of this treatment, while dependent on the specific reaction conditions (e.g., temperatures and concentrations), can range from 3 to 40 days, preferably from 7 to 40 days or from 4 days to 28 days. These ranges provide for convenient reaction times, though higher and lower temperatures and longer or shorter times may also be employed. This hydrothermal treating is also typically done in a sealed autoclave, at autogenous pressures. Additional exemplary reaction conditions are provided in the Examples.

In another set of optimized conditions for preparing CIT-13, in the absence of fluoride or alkali metal or alkaline earth metal cations is suggested to be a gel composition Si/Ge = 2-8, H₂O/T = about 5 to less than 10 (where "T" refers to the total number of Si and Ge atoms); OSDA-OH/T = 0.3 to 0.7 using 1,2-Dimethyl-3-(2-methyl-benzyl)imidazol-1-ium hydroxide or 1,2-dimethyl-3-(3-methyl-benzyl)imidazol-1-ium hydroxide as the OSDA in a 160°C-180 °C static/rotating oven for 1-4 weeks.

In some embodiments the reaction mixture, which may be a suspension or a gel, or a gelling suspension, can be subjected to mild stirring or rolling agitation during crystallization. It will be understood by a person skilled in the art that the as produced crystalline microporous solid s described herein can contain impurities, such as amorphous materials, or materials having framework topologies which do not coincide with the targeted or desired product. During hydrothermal crystallization, the crystals can be allowed to nucleate spontaneously from the reaction mixture.

The use of crystals of the desired crystalline product as seed material can result in decreasing the time necessary for complete crystallization to occur. In addition, seeding can lead to an increased purity of the product obtained by promoting the nucleation and/or formation of the molecular sieve over any undesired phases. When used as seeds, seed crystals are added in an amount between 0.01% and 10%, for example, 1%, of the mass of the total amount of oxide in the reaction mixture. The total amount of oxide refers to the total mass of oxides in the reaction mixture gel prior to heating, present as the oxides or oxide sources.

Once the initially-formed crystalline solids of the CIT-13 topology are prepared (e.g., including pure or substituted germanosilicates), further embodiments comprise isolating these solids. These crystalline solids may be removed from the reaction mixtures by any suitable means (e.g., filtration, centrifugation, etc. or simple removal of the membrane template) and dried. Such drying may be done in air or under vacuum at temperatures ranging from 25°C to about 200°C. Typically, such drying is done at a temperature of about 100°C.

As shown in the various Examples, the methods described herein produce or are capable of producing compositionally "clean" crystalline microporous materials. That is, in various embodiments, the crystalline microporous materials described herein are at least 75%, 80%, 85%, 90%, 95%, or 98% by weight of the nominal topology. In some embodiments, the crystalline microporous materials are sufficiently clean as to exhibit XRD patterns where other crystalline topologies are undetectable.

The crystalline microporous germanosilicate solid products, at least as initially isolated, typically contain amounts of the OSDAs used in their syntheses occluded in their pores, and these can be detected by NMR or inferred by TGA weight loss profiles. These isolated solids also may exhibit power XRD patterns consistent with the structures described herein, perhaps as broadened patterns. Residual OSDAs may be removed from the pores of the isolated solids by any number of suitable methods, for example:
(a) heating the isolated product solid at a temperature in a range of from about 250°C to about 450°C in an oxidizing atmosphere, such as air or oxygen, or in an inert atmosphere, such as argon or nitrogen; or
(b) contacting the isolated product solid with ozone or other oxidizing agent at a temperature in a range of 25°C to 200°C;
for a time sufficient to form a dehydrated or an OSDA-depleted product. The resulting crystalline germanosilicate products are then substantially devoid of residual OSDA.

As used herein, the term "OSDA-depleted" (or composition having depleted OSDA) refers to a composition having a lesser content of OSDA after the treatment than before. In preferred embodiments, substantially all (e.g., greater than 90, 95, 98, 99, or 99.5 wt%) or all of the OSDA is removed by the treatment. In some embodiments, this can be confirmed by the absence of a TGA endotherm associated with the removal of the OSDA when the product material is subject to TGA analysis or the absence or substantial absence of C or N in elemental analysis (prior to heating, expect composition to comprise C, N, O, Si, Al, H).

In those embodiments where the processing involved heating, typical heating rates include is 0.1 °C to 10 °C per minute and or 0.5 °C to 5 °C per minute. Different heating rates may be employed depending on the temperature range. Depending on the nature of the calcining atmosphere, the materials may be heated to the indicated temperatures for periods of time ranging from 1 to 60 hours or more, to produce a catalytically active product.

The ozone-treatment can be carried out in a flow of ozone-containing oxygen (typically for 6 hours or more. but shorter could be feasible). Practically any oxidative environment sufficient to remove the OSDA can be used, especially those already known for this purpose. Such environments, for example, can involve the use of organic oxidizers (alkyl or aryl peroxides or peracids) or inorganic peroxides (e.g., H₂O₂).

Further processing of these materials, whether modified or not, may also comprise, heating the isolated crystalline microporous germanosilicate solid at a temperature in a range of from about 200°C to about 600°C in the presence of an alkali, alkaline earth, transition metal, rare earth metal, ammonium or alkylammonium salts (anions including halide, preferable chloride, nitrate, sulfate, phosphate, carboxylate, or mixtures thereof) for a time sufficient to form a dehydrated or an OSDA-depleted product. In certain of these embodiments, the heating is done in the presence of NaCl or KCl. In certain exemplary embodiments, the heating is done at a temperature in a range of from 500 to 600°C. In exemplary embodiments, the heating is done in either an oxidizing or inert atmosphere.

These crystalline microporous solids may be further modified, for example, by incorporating metals with the pore structures, either before or after drying, for example by replacing some of the cations in the structures with additional metal cations using techniques known to be suitable for this purpose (e.g., ion exchange). Such cations can include those of rare earth, Group 1, Group 2 and transition metals, for example Ca, Cd, Co, Cu, Fe, Mg, Mn, Ni, Pt, Pd, Re, Sn, Ti, V, W, Zn and their mixtures. In other specific embodiments, the metal cation salt is a copper salt, for example, Schweizer's reagent (tetraamminediaquacopper dihydroxide, [Cu(NH₃)₄(H₂O)₂](OH)₂]), copper(II) nitrate, or copper(II) carbonate.

The addition of a transition metal or transition metal oxide may be accomplished, for example by chemical vapor deposition or chemical precipitation. As used herein, the term "transition metal" refers to any element in the d-block of the periodic table, which includes groups 3 to 12 on the periodic table, as well as the elements of the f-block lanthanide and actinide series. This definition of transition metals specifically encompasses Group 4 to Group 12 elements. In certain other independent embodiments, the transition metal or transition metal oxide comprises an element of Groups 6, 7, 8, 9, 10, 11, or 12. In still other independent embodiments, the transition metal or transition metal oxide comprises scandium, yttrium, titanium, zirconium, vanadium, manganese, chromium, molybdenum, tungsten, iron, ruthenium, osmium, cobalt, rhodium, iridium, nickel, palladium, platinum, copper, silver, gold, or mixtures. Fe, Ru, Os, Co, Rh, Ir, Ni, Pd, Pt, Cu, Ag, Au, and mixtures thereof are preferred dopants.

In other embodiments, the optionally doped crystalline solids are calcined in air a temperature defined as being in at least one range of from 400°C to 500°C, from 500 °C to 600 °C, from 600 °C to 700 °C, from 700 °C to 800 °C, from 800 °C to 900 °C, from 900 °C to 1000 °C, from 1000 °C to 1200°C, 500°C to about 1200°C.

### Intermediate Reaction Compositions

Also described herein are the as-formed and post-treated crystalline germanosilicate compositions themselves

These compositions comprise the aqueous compositions used in the hydrothermal treatments together with the respective crystalline microporous seed or product germanosilicates, wherein the germanosilicate products contain the respective OSDAs used in their preparation occluded in their pores.

For example, the composition comprises:
(a) a source of silicon oxide
(b) a source of germanium oxide;
(c) a hydroxide salt of at least one of the substituted benzyl-imidazolium organic structure-directing agent (OSDA) described above, including at least one having a structure: 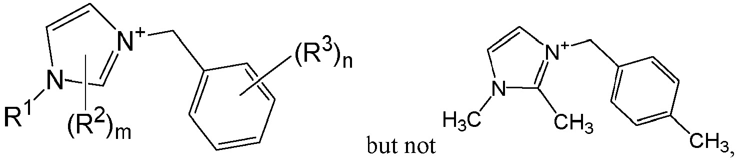 wherein m, n, R¹, R², and R³ are as identified above and elsewhere herein; and
(d) a crystalline microporous germanosilicate compositionally consistent with the CIT-13 topology, or a seed thereof. The composition may be essentially free of fluoride ions.

As used herein, the term "compositionally consistent" refers to a crystalline germanosilicate composition having a stoichiometry consistent with one resulting from the at least a partial progression of the hydrothermal treating process used to prepare these materials. Typically, these compositionally consistent crystalline microporous pure or optionally substituted germanosilicate typically contain, occluded in their pores, the OSDA used to make them; i.e., the OSDA present in the associated aqueous compositions. These compositionally consistent crystalline solids may also be substantially free of the OSDAs used in the aqueous media; the optionally substituted germanosilicates may be used as seed material for the crystallization, also as described elsewhere herein.

These compositions may comprise any of the types, sources, and ratios of ingredients associated with a process described elsewhere herein and may exist at any temperature consistent with the processing conditions described above as useful for hydrothermal processing. It should be appreciated that this disclosure captures each and every of these permutations separately, as if they were separately listed. These compositions may exist in the form of a suspension. Alternatively, these compositions may exist in the form of a gel.

### Terms

In the present disclosure the singular forms "a," "an," and "the" include the plural reference, and reference to a numerical value includes at least that value, unless the context clearly indicates otherwise. Thus, for example, a reference to "a material" is a reference to at least one of such materials and equivalents thereof known to those skilled in the art, and so forth.

When a value is expressed as an approximation by use of the descriptor "about," it will be understood that the value forms another embodiment. In general, use of the term "about" indicates approximations that can vary depending on the desired properties sought to be obtained by the disclosed subject matter and is to be interpreted in the specific context in which it is used, based on its function. The person skilled in the art will be able to interpret this as a matter of routine. In some cases, the number of significant figures used for a particular value may be one non-limiting method of determining the extent of the word "about." In other cases, the gradations used in a series of values may be used to determine the intended range available to the term "about" for each value. Where present, all ranges are inclusive and combinable. That is, references to values stated in ranges include every value within that range.

It is to be appreciated that certain features of the invention which are, for clarity, described herein in the context of separate embodiments, may also be provided in combination in a single embodiment. That is, unless obviously incompatible or specifically excluded, each individual embodiment is deemed to be combinable with any other embodiment(s) and such a combination is considered to be another embodiment. Conversely, various features of the invention that are, for brevity, described in the context of a single embodiment, may also be provided separately or in any sub-combination. Finally, while an embodiment may be described as part of a series of steps or part of a more general structure, each said step may also be considered an independent embodiment in itself, combinable with others.

The transitional terms "comprising," "consisting essentially of," and "consisting" are intended to connote their generally in accepted meanings in the patent vernacular; that is, (i) "comprising," which is synonymous with "including," "containing," or "characterized by," is inclusive or open-ended and does not exclude additional, unrecited elements or method steps; (ii) "consisting of" excludes any element, step, or ingredient not specified in the claim; and (iii) "consisting essentially of" limits the scope of a claim to the specified materials or steps "and those that do not materially affect the basic and novel characteristic(s)" of the claimed invention. Embodiments described in terms of the phrase "comprising" (or its equivalents), also provide, as embodiments, those which are independently described in terms of "consisting of" and "consisting essentially of." For those embodiments provided in terms of "consisting essentially of," the basic and novel characteristic(s) is the facile operability of the methods or compositions/systems to provide the germanosilicate compositions at meaningful yields (or the ability of the systems using only those ingredients listed.

The term "meaningful product yields" is intended to reflect product yields such as described herein, but also including greater than 20%, but when specified, this term may also refer to yields of 10%, 20%, 30%, 40%, 50%, 60%, 70%, 80%, or 90% or more, relative to the amount of original substrate.

When a list is presented, unless stated otherwise, it is to be understood that each individual element of that list, and every combination of that list, is a separate embodiment. For example, a list of embodiments presented as "A, B, or C" is to be interpreted as including the embodiments, "A," "B," "C," "A or B," "A or C," "B or C," or "A, B, or C," as separate embodiments, as well as C₁₋₃.

Throughout this specification, words are to be afforded their normal meaning, as would be understood by those skilled in the relevant art. However, to avoid misunderstanding, the meanings of certain terms will be specifically defined or clarified.

The term "alkyl" as used herein refers to a linear, branched, or cyclic saturated hydrocarbon group typically although not necessarily containing 1 to about 6 carbon atoms, such as methyl, ethyl, n-propyl, isopropyl, n-butyl, isobutyl, *tert*-butyl, and the like.

The term "aromatic" refers to the ring moieties which satisfy the Hückel 4n + 2 rule for aromaticity, and includes both aryl (i.e., carbocyclic) and heteroaryl structures.

The term "halide" is used in the conventional sense to refer to a chloride, bromide, fluoride, or iodide.

"Lower alcohols" or lower alkanes refer to alcohols or alkanes, respectively, having 1-10 carbons, linear or branched, preferably 1-6 carbon atoms and preferably linear. Methanol, ethanol, propanol, butanol, pentanol, and hexanol are examples of lower alcohols. Methane, ethane, propane, butane, pentane, and hexane are examples of lower alkanes.

As used herein, unless otherwise specified, the term "essentially free of," as in "essentially free of fluoride ion and/or alkali metal /alkaline earth metal cations" refers to the condition where the composition to which this term refers is absent of any such deliberately added materials but may include these species as adventitious impurities. The related term "substantially free of," as in "substantially free of OSDAs," unless otherwise specified, refers to the condition where the material (e.g., the OSDA) may have been present at one time, but best reasonable efforts were made to remove the material (i.e., some incidental material may still be present). When either term "essentially free of" or "substantially free of" is used, additional independent alternative embodiments include those where the species to which the terms refer may be present at less than about 1000 ppm, 500 ppm, 250 ppm, 100 ppm, 50 ppm, 30 ppm, 25 ppm, 20 ppm, 15 ppm, 10 ppm, or 5 ppm to about 1, or 0 ppm by weight.

The terms "oxygenated hydrocarbons" or "oxygenates" as known in the art of hydrocarbon processing to refer to components which include alcohols, aldehydes, carboxylic acids, ethers, and/or ketones which are known to be present in hydrocarbon streams or derived from biomass streams other sources (e.g. ethanol from fermenting sugar).

The terms "separating" or "separated" carry their ordinary meaning as would be understood by the skilled artisan, insofar as they connote physically partitioning or isolating solid product materials from other starting materials or co-products or side-products (impurities) associated with the reaction conditions yielding the material. As such, it infers that the skilled artisan at least recognizes the existence of the product and takes specific action to separate or isolate it from starting materials and/or side- or byproducts. Absolute purity is not required, though it is preferred. In the case where the terms are used in the context of gas processing, the terms "separating" or "separated" connote a partitioning of the gases by adsorption or by permeation based on size or physical or chemical properties, as would be understood by those skilled in the art.

Unless otherwise indicated, the term "isolated" means physically separated from the other components to be free of at least solvents or other impurities, such as starting materials, co-products, or byproducts. In some embodiments, the isolated crystalline materials, for example, may be considered isolated when separated from the reaction mixture giving rise to their preparation, from mixed phase co-products, or both. In some of these embodiments, pure germanosilicates (including structures with or without incorporated OSDAs) can be made directly from the described methods. In some cases, it may not be possible to separate crystalline phases from one another, in which case, the term "isolated" can refer to separation from their source compositions.

The term "microporous," according to IUPAC notation refers to a material having pore diameters of less than 2 nm. Similarly, the term "macroporous" refers to materials having pore diameters of greater than 50 nm. And the term "mesoporous" refers to materials whose pore sizes are intermediate between microporous and macroporous. Within the context of the present disclosure, the material properties and applications depend on the properties of the framework such as pore size and dimensionality, cage dimensions and material composition. Due to this there is often only a single framework and composition that gives optimal performance in a desired application.

"Optional" or "optionally" means that the subsequently described circumstance may or may not occur, so that the description includes instances where the circumstance occurs and instances where it does not. For example, the phrase "optionally substituted" means that a non-hydrogen substituent may or may not be present on a given atom, and, thus, the description includes structures wherein a non-hydrogen substituent is present and structures wherein a non-hydrogen substituent is not present.

The terms "method(s)" and "process(es)" are considered interchangeable within this disclosure.

As used herein, the term "crystalline microporous solids" or "crystalline microporous germanosilicate" are crystalline structures having very regular pore structures of molecular dimensions, i.e., under 2 nm. The maximum size of the species that can enter the pores of a crystalline microporous solid is controlled by the dimensions of the channels. These terms may also refer specifically to CIT-13 compositions.

The term "silicate" refers to any composition including silicate (or silicon oxide) within its framework. It is a general term encompassing, for example, pure-silica (i.e., absent other detectable metal oxides within the framework), aluminosilicate, borosilicate, ferrosilicate, germanosilicate, stannosilicate, titanosilicate, or zincosilicate structures. The term "germanosilicate" refers to any composition including silicon and germanium oxides within its framework. Such germanosilicate may be "pure-germanosilicate (i.e., absent other detectable metal oxides within the framework) or optionally substituted. When described as "optionally substituted," the respective framework may contain aluminum, boron, gallium, germanium, hafnium, iron, tin, titanium, indium, vanadium, zinc, zirconium, or other atoms substituted for one or more of the atoms not already contained in the parent framework.

### EXAMPLES

The following Examples are provided to illustrate some of the concepts described within this disclosure. While each Example is considered to provide specific individual embodiments of composition, methods of preparation and use, none of the Examples should be considered to limit the more general embodiments described herein.

In the following examples, efforts have been made to ensure accuracy with respect to numbers used (e.g. amounts, temperature, etc.) but some experimental error and deviation should be accounted for. Unless indicated otherwise, temperature is in degrees C, pressure is at or near atmospheric.

### Example 1: Materials and Methods

Unless otherwise noted, all reagents were purchased from commercial sources and were used as received. Unless otherwise noted all, reactions were conducted in flame-dried glassware under an atmosphere of argon. Hydroxide ion exchanges were performed using OH-form styrene-divinylbenzene (DVB)-matrix ion exchange resin (DOWEX^{™} MARATHON^{™} A) with an exchange capacity of 1 meq/mL. Titrations were performed using a Mettler-Toledo DL22 autotitrator using 0.01 M HCl as the titrant. All liquid NMR spectra were recorded with a 500 MHz Varian Spectrometer. Liquid NMR spectra were recorded on Varian Mercury spectrometers.

All powder x-ray diffraction characterizations were conducted on a Rigaku MiniFlex II diffractometer with Cu Kα radiation.

SEM analyses were performed on a ZEISS 1550 VP FESEM, equipped with an Oxford X-Max SDD X-ray Energy Dispersive Spectrometer (EDS) system for determining the Si/Al ratios of the samples.

### Example 2. Synthesis of the Organic Structuring Agents

A series of six monoquaternary ("monoquat") organic structure-directing agents (OSDAs) were studied. These six monoquats, along with their numerical designations, can be found in **Tables 1A and 1B:**

| **Table1A.** Monoquat benzyl-imidazolium cations studied in this work | | |
|---|---|---|
| **Benzyl-imidazolium (1)** | **Benzyl-imidazolium (2)** | **Benzyl-imidazolium (3)*** |
| 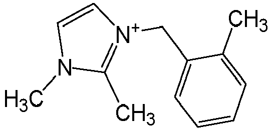 | 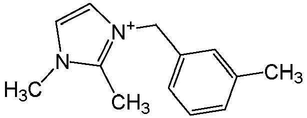 | 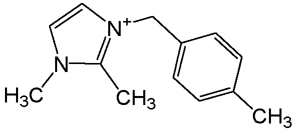 |

| **Table1B.** Monoquat benzyl-imidazolium cations studied in this work | | |
|---|---|---|
| **Benzyl-imidazolium (4)*** | **Benzyl-imidazolium (5)*** | **Benzyl-imidazolium (6)*** |
| 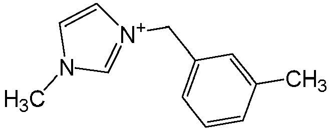 | 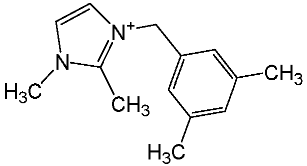 | 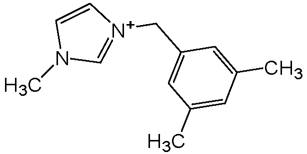 |

| | | |
|---|---|---|
| * = Comparative Example | | |

These were prepared as follows. Unless stated otherwise, reactions were conducted in flame-dried glassware under an atmosphere of argon.

**Example 2.1. Preparation of 1,2-Dimethyl-3-(2-methyl-benzyl)imidazol-1-ium chloride** ("Benzyl-imidazolium (**1**)" or "**OSDA 1**"). A 500 mL flask was charged with 1,2-dimethylimidazole (7.73 grams, 55.0 mmols), 2-methylbenzyl chloride (7.73 grams, 60.5 mmols) and toluene(100 mL). The flask was fitted with a reflux condenser and heated to reflux for 15 hours. Reaction was cooled to 25 °C and resulting solids were filtered and washed with ethyl acetate (3 x 20 mL) to give a white solid (11.84 grams, 91% yield). ¹H NMR (500 MHz, CD₃OD): δ 7.37-7.33 (m, 2H), 7.31 (d, J= 5.0 Hz, 1H), 7.30-7.26 (m, 1H), 7.02 (d, J= 5.0 Hz, 1H) 5.45 (s, 2H), 3.92 (s, 3H), 2.67 (s, 3H), 2.38 (s, 3H). ¹³C NMR (126 MHz, CD₃OD) δ 145.08, 136.40, 131.36, 130.69, 128.81, 127.56, 126.47, 122.44, 120.88, 49.59, 34.15, 17.66, 8.35.

**Example 2.2. Preparation of 1,2-Dimethyl-3-(3-methyl-benzyl)imidazol-1-ium chloride** ("Benzyl-imidazolium (**2**)" or "**OSDA 2**"). This OSDA was prepared as in **Example 2.1,** except that 3-methylbenzyl chloride was used instead of 2-methylbenzyl chloride. The reaction yielded a beige solid (22.65 grams, 87% yield). ¹H NMR (500 MHz, CD₃OD): δ 7.55 (s, 2H), 7.34 (dd, J= 10.0, 5.0, 1H), 7.25 (d, J= 10.0, 1H), 7.20 (s, 1H), 7.14 (d, J= 5.0, 1H), 5.40(s, 2H), 3.88 (s, 3H), 2.67 (s, 3H), 2.39(s, 3H). ¹³C NMR (125.7 MHz, CD₃OD) δ 144.8, 139.1, 133.7, 129.3, 128.9, 128.1, 124.6, 122.4, 121.2, 51.3, 34.1, 19.9, 8.4.

**Example 2.3. Preparation of 1,2-Dimethyl-3-(3-methylbenzyl)imidazolium hydroxide ("Benzyl-imidazolium (2)"** or **"OSDA 2").** This OSDA was prepared according to the method of **Example 2.2,** except that the obtained chloride salt was repeatedly washed with 4 L of diethyl ether and dried under vacuum for 12 hours. The chloride anions were exchanged with hydroxyl anions using OH-form styrene-divinylbenzene (DVB)-matrix ion exchange resin (DOWEX^{™} MARATHON^{™} A). ¹H NMR (500 MHz, CDCl₃): δ 7.79 (d, 1H), 7.58 (d, 1H), 7.29 (m, 1H), 7.19 (m, 1H), 7.11 (m, 1H), 7.10 (m, 1H), 5.49 (s, 2H), 4.03 (s, 3H), 2.81 (s, 3H), 2.37 (s, 3H). ¹³C NMR (125.7 MHz, CDCl₃): δ 144.29, 139.37, 132.79, 129.92, 129.29, 128.60, 125.10, 122.96, 121.73, 52.46, 35.90, 21.36, 10.90.

**Comparative Example 2.4. Preparation of 1,2-Dimethyl-3-(4-methyl-benzyl) imidazol-1-ium hydroxide** ("Benzyl-imidazolium (**3**)" or **"OSDA 3**"). This OSDA was prepared according to the method of **Example 2.1,** except that 4-methylbenzyl chloride was used instead of 2-methylbenzyl chloride. The reaction yielded a white solid (24.10 grams, 92% yield). The chloride anions were exchanged with hydroxyl anions using OH-form styrene-divinylbenzene (DVB)-matrix ion exchange resin (DOWEX^{™} MARATHON^{™} A). ¹H NMR (500 MHz, CD₃OD): δ 7.54-7.53 (m, 2H), 7.28 (d, J= 5.0, 2H), 7.28 (d, J= 5.0, 2H), 5.34(s, 2H), 3.87 (s, 3H), 2.67 (s, 3H), 2.39(s, 3H). ¹³C NMR (125.7 MHz, CD₃OD) δ 144.8, 138.8, 130.7, 129.5, 127.6, 122.4, 121.1, 51.2, 34.1, 19.7, 8.4.

**Comparative Example 2.5. Preparation of 1-methyl-3-(3-methylbenzyl)imidazolium hydroxide ("Benzyl-imidazolium (4)"** or **"OSDA 4"). 1-**Methylimidazole (14.4 g, 150 mmol) was dissolved in 300 ml of toluene and heated up to 45°C. While vigorously stirring, 3-methylbenzyl chloride (21.1 g, 150 mmol) was added dropwise. After 30 min of additional stirring, the temperature was increased to 105 °C and the reaction proceeded for 24 hours. After that, the reaction mixture was cooled in a dry ice bath since this imidazolium salt exists as a liquid salt at the room temperature in its chloride form. A cold filtration was performed to isolate the product in solid form. The obtained chloride salt was repeatedly washed with 4 L of cold diethyl ether and dried under vacuum for 12 hours. The chloride anions were exchanged with hydroxyl anions using OH-form styrene-divinylbenzene (DVB)-matrix ion exchange resin (DOWEX^{™} MARATHON^{™} A). ¹H NMR (500 MHz, CDCl₃): δ 10.54 (s, 1H), 7.64 (t, 1H), 7.32 (m, 1H), 7.14 (m, 3H), 7.05 (m, 1H), 5.42 (s, 2H), 3.97 (s, 3H), 2.22 (s, 3H). ¹³C NMR (125.7 MHz, CDCl₃): δ 139.14, 137.42, 133.02, 130.04, 129.28, 129.12, 125.77, 123.92, 121.78, 53.07, 36.46, 21.21.

**Comparative Example 2.6. Preparation of 1,2-Dimethyl-3-(3,5-dimethylbenzyl)imidazolium hydroxide ("Benzyl-imidazolium (5)"** or **"OSDA 5").** 1,2-Dimethylimidazole (12.3 g, 150 mmol) was dissolved in 300 ml of toluene in an ice bath. While vigorously stirring, 3,5-dimethylbenzyl bromide (29.9 g, 150 mmol) was added. After 30 min of additional stirring, the temperature was slowly increased to 105°C and the reaction proceeded for 15 hours, after which the reaction mixture was cooled and filtered. The obtained chloride salt was repeatedly washed with 4 L of diethyl ether and dried under vacuum for 12 hours. The chloride anions were exchanged with hydroxyl anions using OH-form ion exchange resin. ¹H NMR (500 MHz, CDCl₃): δ 7.77 (d, 1H), 7.49 (d, 1H), 6.99 (m, 1H), 6.89 (m, 2H), 5.41 (s, 2H), 4.03 (s, 3H), 3.19 (s, 3H), 2.31 (s, 6H). ¹³C NMR (125.7 MHz, CDCl₃): δ 144.29, 139.19, 132.55, 130.81, 125.71, 122.92, 121.61, 52.57, 36.19, 21.23, 11.38.

**Comparative Example 2.7. Preparation of 1-Methyl-3-(3,5-dimethylbenzyl)imidazolium hydroxide ("Benzyl-imidazolium (6)"** or **"OSDA 6").** This OSDA was prepared according to the method of **Example 2.6** using 1-methylimidazole and 3,5-dimethylbenzyl bromide. The obtained chloride salt was repeatedly washed with 4 L of diethyl ether and dried under vacuum for 12 hours. The chloride anions were exchanged with hydroxyl anions using OH-form ion exchange resin. ¹H NMR (500 MHz, CDCl₃): δ 10.46 (td, 1H), 7.53 (t, 1H), 7.27 (d, 1H), 7.00 (dm, 3H), 5.44 (s, 2H), 4.09 (s, 3H), 2.28 (s, 6H). ¹³C NMR (125.7 MHz, CDCl₃): δ 139.23, 137.34, 132.55, 131.17, 126.59, 123.65, 121.71, 53.44, 36.78, 21.18.

### Example 3. Use of Hydroxide Forms of OSDAs

Experiments were conducted in which the hydroxide mineralizing agent was introduced solely with the OSDAs; i.e., in the absence of alkali metal or alkaline earth metal cations. In these experiments, the three configurational isomers of the hydroxide salts of the benzyl-imidazolium structure-directing agent (OSDA) described as the ortho, meta, and para (the para being comparative) versions of the benzyl-imidazolium organic structure-directing agent (OSDA) were used to crystallize germanosilicate materials. In these cases, the OSDA-OH ("ROH") compositions provided the hydroxide needed to form the CIT-13 materials.

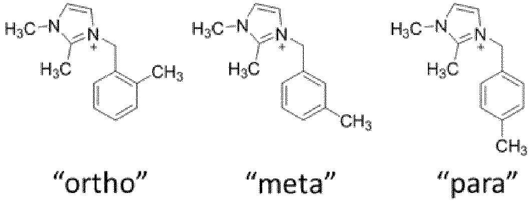

In these experiments, a desired amount of germanium dioxide was dissolved in OSDA-hydroxide aqueous solution in a 23 mL polytetrafluoroethylene (PTFE) liner for Parr steel autoclaves. And then, TEOS was added dropwise and completely hydrolyzed by vigorously stirring for 12-24 hours. The excess water and ethanol were evaporated by drying the mixture under an air flow. The final gel was very viscous. The overall gel compositions were shown in **Table 2**. The germanosilicate gels were sealed in autoclaves and transferred to a rotating oven. The crystallization was performed for 2 weeks at 175 °C. The resultant products were thoroughly washed with pure water and acetone and dried at 100°C overnight.

| **Table 2**. The compositional information of synthetic gels and the phase and compositional information of the resultant materials demonstrated in Example 3. | | | | | | | | |
|---|---|---|---|---|---|---|---|---|
| **Batch** | **Molar Gel Composition** | | | | | **Temp, °C** | **Characterization** | |
| | **SiO₂** | **GeO₂** | **ROH** | **HF** | **H₂O** | | **PXRD** | **EDS Si/Ge** |
| **1** | 0.67 | 0.33 | 0.5 (ortho) | - | 7.0 | 175°C | **Pure CIT-13** | 3.88 |
| **2** | 0.67 | 0.33 | | - | 10.0 | 175°C | Impure CIT-13 | - |
| **3*** | 0.80 | 0.20 | | - | 7.0 | 175°C | Amorphous | - |
| **4** | 0.67 | 0.33 | 0.5 (meta) | - | 7.0 | 175°C | Impure CIT-13 | - |
| **5*** | 0.67 | 0.33 | | - | 10.0 | 175°C | Amorphous | - |
| **6** | 0.80 | 0.20 | | - | 7.0 | 175°C | **Pure CIT-13** | 5.13 |
| **7*** | 0.67 | 0.33 | 0.5 (para) | - | 7.0 | 175°C | Unidentified | - |
| **Ref.** | 0.67-0.80 | 0.20-0.33 | 0.5 | 0.5 | 10.0 | 140-175°C | Pure CIT-13 | 3.8-5.0 |

| | | | | | | | | |
|---|---|---|---|---|---|---|---|---|
| * = Comparative Examples | | | | | | | | |

## Claims

1. A method of preparing a crystalline microporous germanosilicate composition designated CIT-13, comprising a three-dimensional framework having pores defined by 10- and 14-membered rings and exhibiting a powder X-ray diffraction (XRD) pattern exhibiting at least five peaks at 6.45 ± 0.2, 7.18 ± 0.2, 12.85 ± 0.2, 20.78 ± 0.2, 26.01 ± 0.2, and 26.68 ± 0.2 degrees 2-θ, the method comprising hydrothermally treating an aqueous composition comprising:
(a) a source of a silicon oxide
(b) a source of a germanium oxide;
(c) at least one hydroxide salt of at least one substituted benzyl-imidazolium organic structure-directing agent (OSDA) having a structure: 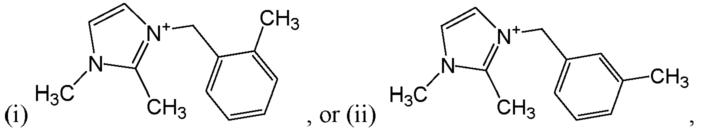 and
(d) water,
under conditions effective to crystallize the crystalline microporous germanosilicate composition, designated CIT-13, wherein
when the OSDA is (i), the molar ratio of Si:Ge atoms is in a range from 1:1 to 3:1, and
when the OSDA is (ii), the molar ratio of water : (Si+Ge) is in a range from 2 to 9,
and wherein fluoride ions are either absent from the aqueous composition or are present at less than 1000 ppm by weight.

2. The method of claim 1, wherein the source of the silicon oxide comprises a silicate, silica hydrogel, silicic acid, fumed silica, colloidal silica, tetra-alkyl orthosilicate, a silica hydroxide or combination thereof, preferably wherein the source of the silicon oxide is a sodium silicate or a tetraalkyl orthosilicate, more preferably wherein the source of the silicon oxide is tetraethyl orthosilicate (TEOS).

3. The method of claim 1, wherein the source of the germanium oxide comprises GeO₂, or a hydrated derivative thereof.

4. The method of claim 1, wherein the aqueous composition comprises water present in a molar ratio of water : Si in a range of from 8:1 to 12:1.

5. The method of claim 1, wherein the aqueous composition comprises water present in a molar ratio of water : (SiO₂+GeO₂) in a range of from 6:1 to 8:1.

6. The method of claim 1, wherein the aqueous composition comprises hydroxide ions (OH) present in a molar ratio of OH : (SiO₂+GeO₂) in a range of 0.3:1 to 0.7:1, preferably wherein the aqueous composition comprises hydroxide ions (OH) present in a molar ratio of OH :
(SiO₂+GeO₂) in a range of 0.4:1 to 0.6:1.

7. The method of claim 1, wherein the aqueous composition comprises the substituted benzyl-imidazolium organic structure-directing agent (OSDA) in a molar ratio of OSDA :
(SiO₂+GeO₂) in a range of 0.3:1 to 0.7:1, preferably wherein the aqueous composition comprises the substituted benzyl-imidazolium organic structure-directing agent (OSDA) in a molar ratio of OSDA : (SiO₂+GeO₂) in a range of 0.4:1 to 0.6:1.

8. The method of claim 1, wherein alkali metal cations, alkaline earth metal cations or dications, or combinations thereof, are either absent from the aqueous composition or are present at less than 1000 ppm by weight.

9. The method of claim 1, wherein the aqueous composition is a suspension or a gel

10. The method of claim 1, wherein effective crystallization conditions include a temperature of from 140 °C to 180°C, and a time of from 4 days to 4 weeks.

11. The method of claim 1, further comprising isolating the crystalline microporous germanosilicate solid composition.

12. The method of claim 11, further comprising:
(a) heating the isolated crystalline microporous solid product at a temperature in a range of from 250°C to 450°C; or
(b) contacting the isolated crystalline microporous solid product with ozone or other oxidizing agent at a temperature in a range of 25°C to 200°C;
for a time sufficient to form a dehydrated or an OSDA-depleted product,
and preferably further comprising:
(a) treating the dehydrated or OSDA-depleted product with an aqueous alkali, alkaline earth, transition metal, rare earth metal, ammonium or alkylammonium salt; and/ or
(b) treating the dehydrated or OSDA-depleted product with at least one type of transition metal or transition metal oxide,

13. The method of claim 12, further comprising calcining the isolated crystalline microporous solid composition in air a temperature in a range of from 500°C to 1200 °C.

## Patentansprüche

1. Ein Verfahren zum Herstellen einer kristallinen mikroporösen Germanosilikatzusammensetzung, bezeichnet als CIT-13, die ein dreidimensionales Gerüst beinhaltet, das Poren aufweist, die durch 10- und 14-gliedrige Ringe definiert sind und ein Pulverröntgenbeugungs(XRD)-Muster vorweisen, das mindestens fünf Peaks bei 6,45 ± 0,2, 7,18 ± 0,2, 12,85 ± 0,2, 20,78 ± 0,2, 26,01 ± 0,2 und 26,68 ± 0,2 Grad 2 - 8 vorweist, wobei das Verfahren das hydrothermische Behandeln einer wässrigen Zusammensetzung beinhaltet, die Folgendes beinhaltet:
(a) eine Siliciumoxidquelle
(b) eine Germaniumoxidquelle;
(c) mindestens ein Hydroxidsalz von mindestens einem substituierten organischen Benzyl-Imidazolium-Strukturleitmittel (OSDA), das die folgende Struktur aufweist: 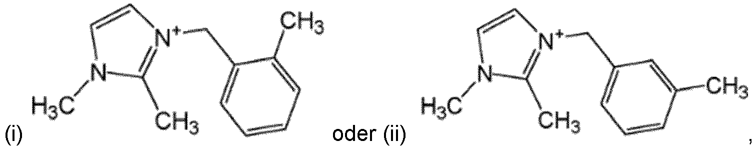 und
(d) Wasser,
unter Bedingungen, die wirksam sind, um die kristalline mikroporöse Germanosilikatzusammensetzung, bezeichnet als CIT-13, zu kristallisieren, wobei wenn das OSDA (i) ist, das Molverhältnis von Si-Atomen zu Ge-Atomen in einem Bereich von 1 : 1 bis 3 : 1 liegt, und
wenn das OSDA (ii) ist, das Molverhältnis von Wasser : (Si + Ge) in einem Bereich von 2 bis 9 liegt,
und wobei Fluoridionen von der wässrigen Zusammensetzung entweder abwesend sind oder mit weniger als 1000 ppm nach Gewicht vorhanden sind.

2. Verfahren gemäß Anspruch 1, wobei die Quelle des Siliciumoxids ein Silikat, Siliciumdioxidhydrogel, Kieselsäure, pyrogenes Siliciumdioxid, Kieselsol, Tetraalkylorthosilikat, Siliciumdioxidhydroxid oder eine Kombination davon beinhaltet, wobei die Quelle des Siliciumoxids vorzugsweise ein Natriumsilikat oder ein Tetraalkylorthosilikat ist, wobei die Quelle des Siliciumoxids noch bevorzugter ein Tetraethylorthosilikat (TEOS) ist.

3. Verfahren gemäß Anspruch 1, wobei die Quelle des Germaniumoxids GeO₂ oder ein hydratisiertes Derivat davon beinhaltet.

4. Verfahren gemäß Anspruch 1, wobei die wässrige Zusammensetzung Wasser beinhaltet, das in einem Molverhältnis von Wasser : Si in einem Bereich von 8 : 1 bis 12 : 1 vorhanden ist.

5. Verfahren gemäß Anspruch 1, wobei die wässrige Zusammensetzung Wasser beinhaltet, das in einem Molverhältnis von Wasser : (SiO₂ + GeO₂) in einem Bereich von 6 : 1 bis 8 : 1 vorhanden ist.

6. Verfahren gemäß Anspruch 1, wobei die wässrige Zusammensetzung Hydroxidionen (OH) beinhaltet, die in einem Molverhältnis von OH : (SiO₂ + GeO₂) in einem Bereich von 0,3 : 1 bis 0,7 : 1 vorhanden sind, wobei die wässrige Zusammensetzung vorzugsweise Hydroxidionen (OH) beinhaltet, die in einem Molverhältnis von OH : (SiO₂ + GeO₂) in einem Bereich von 0,4 : 1 bis 0,6 : 1 vorhanden sind.

7. Verfahren gemäß Anspruch 1, wobei die wässrige Zusammensetzung das substituierte organische Benzyl-Imidazolium-Strukturleitmittel (OSDA) in einem Molverhältnis von OSDA : (SiO₂ + GeO₂) in einem Bereich von 0,3 : 1 bis 0,7 : 1 beinhaltet, wobei die wässrige Zusammensetzung vorzugsweise das substituierte organische Benzyl-Imidazolium-Strukturleitmittel (OSDA) in einem Molverhältnis von OSDA : (SiO₂ + GeO₂) in einem Bereich von 0,4 : 1 bis 0,6 : 1 beinhaltet.

8. Verfahren gemäß Anspruch 1, wobei die Alkalimetallkationen, Erdalkalimetallkationen oder -dikationen oder Kombinationen davon von der wässrigen Zusammensetzung entweder abwesend sind oder mit weniger als 1000 ppm nach Gewicht vorhanden sind.

9. Verfahren gemäß Anspruch 1, wobei die wässrige Zusammensetzung eine Suspension oder ein Gel ist.

10. Verfahren gemäß Anspruch 1, wobei wirksame Kristallisationsbedingungen eine Temperatur von 140 °C bis 180 °C und eine Zeit von 4 Tagen bis 4 Wochen umfassen.

11. Verfahren gemäß Anspruch 1, das ferner das Isolieren der kristallinen mikroporösen Germanosilikatfeststoffzusammensetzung beinhaltet.

12. Verfahren gemäß Anspruch 11, das ferner Folgendes beinhaltet:
(a) Erhitzen des isolierten kristallinen mikroporösen Feststoffprodukts bei einer Temperatur in einem Bereich von 250 °C bis 450 °C; oder
(b) In-Kontakt-Bringen des isolierten kristallinen mikroporösen Feststoffprodukts mit Ozon oder einem anderen Oxidationsmittel bei einer Temperatur in einem Bereich von 25 °C bis 200 °C;
für eine Dauer, die ausreicht, um ein dehydriertes oder ein OSDA-abgereichertes Produkt zu bilden,
und vorzugsweise ferner Folgendes beinhaltet:
(a) Behandeln des dehydrierten oder OSDA-abgereicherten Produkts mit einem wässrigen Alkali, einer wässrigen Alkalierde, einem wässrigen Übergangsmetall, einem wässrigen Seltenerdmetall, einem wässrigen Ammonium oder einem wässrigen Alkylammoniumsalz; und/oder
(b) Behandeln des dehydrierten oder OSDA-abgereicherten Produkts mit mindestens einem Typ von Übergangsmetall oder Übergangsmetalloxid.

13. Verfahren gemäß Anspruch 12, ferner beinhaltend das Kalzinieren der isolierten kristallinen mikroporösen Feststoffzusammensetzung an der Luft bei einer Temperatur in einem Bereich von 500 °C bis 1200 °C.

## Revendications

1. Un procédé de préparation d'une composition de germanosilicate microporeux cristallin désignée CIT-13, comprenant un réseau tridimensionnel ayant des pores définis par des cycles à 10 et 14 chaînons et présentant un diagramme de diffraction des rayons X (XRD) sur poudre présentant au moins cinq pics à 6,45 ±0,2, 7,18 ±0,2, 12,85 ±0,2, 20,78 ±0,2, 26,01 ±0,2, et 26,68 ±0,2 degrés en 20, le procédé comprenant le traitement hydrothermal d'une composition aqueuse comprenant :
(a) une source d'un oxyde de silicium
(b) une source d'un oxyde de germanium ;
(c) au moins un sel hydroxyde d'au moins un agent directeur de structure organique (OSDA) benzyl-imidazolium substitué ayant une structure : 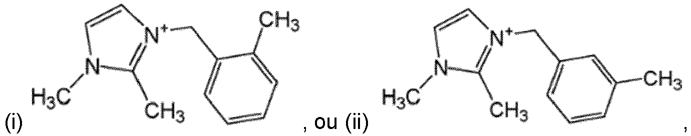 et
(d) de l'eau,
dans des conditions efficaces pour cristalliser la composition de germanosilicate microporeux cristallin, désignée CIT-13, où
lorsque l'OSDA est (i), le rapport molaire d'atomes Si/Ge se trouve dans une plage allant de 1/1 à 3/1, et
lorsque l'OSDA est (ii), le rapport molaire d'eau/(Si+Ge) se trouve dans une plage allant de 2 à 9,
et où des ions fluorure sont soit absents de la composition aqueuse, soit présents à hauteur de moins de 1 000 ppm en poids.

2. Le procédé de la revendication 1, où la source de l'oxyde de silicium comprend un silicate, de l'hydrogel de silice, de l'acide silicique, de la silice pyrogénée, de la silice colloïdale, de l'orthosilicate de tétraalkyle, un hydroxyde de silice ou une combinaison de ceux-ci, préférablement où la source de l'oxyde de silicium est un silicate de sodium ou un orthosilicate de tétraalkyle, plus préférablement où la source de l'oxyde de silicium est l'orthosilicate de tétraéthyle (TEOS).

3. Le procédé de la revendication 1, où la source de l'oxyde de germanium comprend du GeO₂, ou un dérivé hydraté de celui-ci.

4. Le procédé de la revendication 1, où la composition aqueuse comprend de l'eau présente dans un rapport molaire d'eau/Si se trouvant dans une plage allant de 8/1 à 12/1.

5. Le procédé de la revendication 1, où la composition aqueuse comprend de l'eau présente dans un rapport molaire d'eau/(SiO₂+GeO₂) se trouvant dans une plage allant de 6/1 à 8/1.

6. Le procédé de la revendication 1, où la composition aqueuse comprend des ions hydroxyde (OH) présents dans un rapport molaire de OH/(SiO₂+GeO₂) se trouvant dans une plage de 0,3/1 à 0,7/1, préférablement où la composition aqueuse comprend des ions hydroxyde (OH) présents dans un rapport molaire de OH/(SiO₂+GeO₂) se trouvant dans une plage de 0,4/1 à 0,6/1.

7. Le procédé de la revendication 1, où la composition aqueuse comprend l'agent directeur de structure organique (OSDA) benzyl-imidazolium substitué dans un rapport molaire de OSDA/(SiO₂+GeO₂) se trouvant dans une plage de 0,3/1 à 0,7/1, préférablement où la composition aqueuse comprend l'agent directeur de structure organique (OSDA) benzyl-imidazolium substitué dans un rapport molaire de OSDA/(SiO₂+GeO₂) se trouvant dans une plage de 0,4/1 à 0,6/1.

8. Le procédé de la revendication 1, où des cations métalliques alcalins, des cations métalliques alcalino-terreux ou des dications, ou des combinaisons de ceux-ci, sont soit absents de la composition aqueuse, soit présents à hauteur de moins de 1 000 ppm en poids.

9. Le procédé de la revendication 1, où la composition aqueuse est une suspension ou un gel.

10. Le procédé de la revendication 1, où des conditions de cristallisation efficaces incluent une température allant de 140 °C à 180 °C, et une durée allant de 4 jours à 4 semaines.

11. Le procédé de la revendication 1, comprenant en outre l'isolement de la composition solide de germanosilicate microporeux cristallin.

12. Le procédé de la revendication 11, comprenant en outre :
(a) le chauffage du produit solide microporeux cristallin isolé à une température se trouvant dans une plage allant de 250 °C à 450 °C ; ou
(b) la mise en contact du produit solide microporeux cristallin isolé avec de l'ozone ou un autre agent d'oxydation à une température se trouvant dans une plage de 25 °C à 200 °C ;
pendant une durée suffisante pour former un produit déshydraté ou appauvri en OSDA,
et préférablement comprenant en outre :
(a) le traitement du produit déshydraté ou appauvri en OSDA avec un sel alcalin, de métal alcalino-terreux, de métal de transition, de métal des terres rares, d'ammonium ou d'alkylammonium aqueux ; et/ou
(b) le traitement du produit déshydraté ou appauvri en OSDA avec au moins un type de métal de transition ou d'oxyde de métal de transition.

13. Le procédé de la revendication 12, comprenant en outre la calcination de la composition solide microporeuse cristalline isolée dans de l'air à une température se trouvant dans une plage allant de 500 °C à 1 200 °C.
